# EUROPÄISCHE PATENTANMELDUNG

(11) **EP 3 335 855 A1**
(43) Veröffentlichungstag der Anmeldung: **20.06.2018**
(21) Anmeldenummer: 16204255.0
(22) Anmeldetag: 15.12.2016
(51) Int. Cl.: B29C 47/36, B29C 47/00, B29C 47/08, F04C 2/14, F04C 2/18, F04C 15/06, B29C 67/00

(54) **ZAHNRADPUMPE FÜR EINE MATERIALSCHMELZE, EXTRUSIONSVORRICHTUNG UND VERFAHREN ZUR FILAMENTHERSTELLUNG**

(71) Anmelder: Technische Universität München, 80333 München (DE)
(72) Erfinder: FISCHER, Stefan, 82377 Penzberg (DE); LEONHARDT, Stefan, 80797 München (DE)
(74) Vertreter: Hoefer & Partner Patentanwälte mbB

(57) **Zusammenfassung**

Die Erfindung betrifft eine Förderpumpe (1) für eine Materialschmelze und insbesondere Schmelzepumpe zur Filamentherstellung, welche als Verdrängerpumpe einen Zuführkanal (41) zum Zuführen einer Materialschmelze, einen Auslasskanal (42) zum Abführen der Materialschmelze und eine Zahnradanordnung (4), mit einem ersten Zahnrad (10) mit einer ersten Rotationsachse (11) und mit einem mit diesem in kämmendem Eingriff stehenden zweiten Zahnrad (20) mit einer zweiten Rotationsachse (21), in einem Übergangsbereich zwischen und in Fluidverbindung mit dem Zuführkanal (41) und dem Auslasskanal (42) aufweist. Bei der erfindungsgemäßen Förderpumpe (1) sind das erste Zahnrad (10) und das zweite Zahnrad (20) miteinander kämmend um ihre jeweilige Rotationsachse (11, 21) derart rotierbar, dass bei Rotation eine zugeführte Materialschmelze vom Zuführkanal (41) zum Auslasskanal (42) überführbar ist. Eine Längsachse (43) des Zuführkanals (41) und eine Längsachse (44) des Auslasskanals (42) schließen einen von 0° und von 180° verschiedenen Winkel ein. Eine auf den Rotationsachsen (11, 21) der Zahnräder (10, 20) senkrecht stehende Verbindungslinie (45) der Rotationsachsen (11, 21) schließt mit der Längsachse (43) des Zuführkanals (41) und mit der Längsachse (44) des Auslasskanals (42) jeweils einen von 90° verschiedenen Winkel ein.

## Beschreibung

Die Erfindung betrifft eine Förderpumpe für eine Materialschmelze, eine Extrusionsvorrichtung und ein Verfahren zur Filamentherstellung aus einer Materialschmelze. Die vorliegende Erfindung betrifft insbesondere eine Schmelzepumpe zur Filamentherstellung und eine Extrusionsvorrichtung zur Filamentherstellung aus einer Materialschmelze.

Bei der Filamentherstellung, insbesondere im Zusammenhang mit Verfahren der Fused-Filament-Fabrication (FFF) oder des Fused-Deposition-Modelings (FDM, Schmelzschichtung), werden Filamentkomponenten zum Einsatz gebracht, um höher geordnete Materialkonfigurationen zu erzeugen. Die Qualität und Integrität der erzeugten Produkte hängen dabei maßgeblich von der Ausgangsqualität der Filamentkomponenten ab.

Die Filamentkomponenten als solche werden im Zusammenhang mit Materialschmelzen aus Extrusionsvorrichtungen gewonnen. Dabei müssen die Materialschmelzen aus der jeweiligen Extrusionsvorrichtung für einen Materialaustrag und zur Ausbildung der Grundform der Filamentkomponenten zu einer Düse gefördert werden.

Bei der Förderung zum Einsatz kommende, herkömmliche Schmelzepumpen als Förderpumpen auf der Grundlage des Verdrängerprinzips besitzen eine vergleichsweise komplexen Aufbau und sind nicht oder nur unzureichend in der Lage, für die Materialschmelze eine stressfreie Richtungsänderung des Materialflusses zu bewirken.

Es ist eine Aufgabe der vorliegenden Erfindung, eine Förderpumpe für eine Materialschmelze, eine Extrusionsvorrichtung und ein Verfahren zur Filamentherstellung aus einer Materialschmelze anzugeben, bei welchen mit besonders einfachen Mitteln eine die Integrität der Materialschmelze bewahrende Handhabung bei einer Richtungsänderung des Materialflusses möglich ist.

Die Lösung dieser Aufgabe erfolgt bei einer Förderpumpe für eine Materialschmelze erfindungsgemäß mit den Merkmalen des unabhängigen Patentanspruchs 1, bei einer Extrusionsvorrichtung erfindungsgemäß mit den Merkmalen des unabhängigen Patentanspruchs 9 und bei einem Verfahren zur Filamentherstellung aus einer Materialschmelze erfindungsgemäß mit den Merkmalen des unabhängigen Patentanspruchs 10. Vorteilhafte Weiterbildungen sind jeweils Gegenstand der abhängigen Ansprüche.

Gemäß einem ersten Aspekt betrifft die vorliegende Erfindung eine Förderpumpe für eine Materialschmelze und insbesondere eine Schmelzepumpe zur Filamentherstellung, welche als Verdrängerpumpe (i) einen ersten Kanal oder Zuführkanal zum Zuführen einer Materialschmelze, (ii) einen zweiten Kanal oder Auslasskanal zum Abführen oder Auslassen der Materialschmelze und (iii) eine Zahnradanordnung mit einem ersten Zahnrad mit einer ersten Rotationsachse und mit einem mit diesem in kämmendem Eingriff stehenden zweiten Zahnrad mit einer zweiten Rotationsachse, in einem Übergangsbereich zwischen und in Fluidverbindung mit dem Zuführkanal und dem Auslasskanal aufweist.

Dabei sind das erste Zahnrad und das zweite Zahnrad miteinander kämmend um ihre jeweilige Rotationsachse derart rotierbar, dass bei Rotation eine zugeführte Materialschmelze vom Zuführkanal zum Auslasskanal überführbar ist.

Ferner schließen eine Längsachse oder Richtung des Zuführkanals und eine Längsachse oder Richtung des Auslasskanals einen von 0° und von 180° verschiedenen Winkel ein, der einer Richtungsänderung des Materialflusses zu Grunde gelegt ist.

Darüber hinaus schließt eine auf den Rotationsachsen der Zahnräder senkrecht stehende Verbindungslinie der Rotationsachsen der Zahnräder mit der Richtung des Zuführkanals und mit der Richtung des Auslasskanals jeweils einen von 90° verschiedenen Winkel ein.

Durch die erfindungsgemäß vorgesehenen Maßnahmen erfolgt bei der Förderung der Materialschmelze vom Zuführkanal oder Förderkanal zum Auslasskanal oder Abführkanal inhärent eine Richtungsänderung des Materialflusses unter besonders geringer mechanischer Belastung der Integrität der Materialschmelze.

Insbesondere besteht die Zahnradanordnung aus genau dem ersten Zahnrad und dem zweiten Zahnrad.

Bei einer bevorzugten Ausführungsform der erfindungsgemäßen Förderpumpe weist der Winkel zwischen der Längsachse oder der Richtung des Zuführkanals und der Längsachse oder der Richtung des Auslasskanals einen Wert von 90° oder im Wesentlichen 90° auf, wobei vorangehend und nachfolgend insbesondere davon ausgegangen werden kann, dass es sich beim Zuführkanal und beim Auslasskanal um sich im Wesentlichen linear erstreckende Kanäle mit konstanter Richtung handelt. Auf diese Weise ist z.B. gerade auch eine im Wesentlichen senkrechte Richtungsänderung des Materialflusses auf schonende Weise möglich. Diese kann zum Beispiel von einer horizontalen Zuführrichtung senkrecht zur Schwerkraft hin zu einer parallel zur Schwerkraft verlaufenden Auslassrichtung erfolgen, insbesondere in Richtung der Erdbeschleunigung und ohne dass es zur Beeinträchtigung der mechanischen Integrität der Materialschmelze kommt.

Alternativ oder zusätzlich kann es dazu vorgesehen sein, dass die Winkel zwischen der senkrechten Verbindungslinie der Rotationsachsen der Zahnräder und den Längsachsen oder den Richtungen des Zuführkanals bzw. des Auslasskanals gleich oder im Wesentlichen gleich sind und insbesondere einen Wert von 45° oder im Wesentlichen 45° aufweisen. In diesem Zusammenhang bildet die senkrecht auf den Rotationsachsen der Zahnräder stehenden Verbindungslinie zwischen den Rotationsachsen der Zahnräder eine Winkelhalbierende des Winkels zwischen den Längsachsen oder den Richtungen des Zuführkanals und des Auslasskanals.

Zwar sind für Förderpumpen nach dem Verdrängerprinzip durch entsprechende Anpassung der Verzahnung grundsätzlich Zahnradanordnungen in beliebiger Ausrichtung der Rotationsachsen der Zahnräder in Bezug aufeinander denkbar.

Ein besonders kompakter und einfacher Aufbau ergibt sich für eine Förderpumpe gemäß einer anderen vorteilhaften Weiterbildung der Erfindung jedoch dann, wenn die Rotationsachsen der Zahnräder zueinander parallel ausgerichtet sind und insbesondere senkrecht zu einer durch die Längsachsen oder die Richtungen des Zuführkanals und des Auslasskanals definierten Ebene ausgerichtet sind.

Zusätzlich oder alternativ können dabei die Zahnräder der Zahnradanordnung mit ihren Zahnradkörpern im Wesentlichen in einer Ebene liegen und insbesondere in derjenigen Ebene, die von den Längsachsen oder den Richtungen des Zuführkanals und des Auslasskanals aufgespannt wird, oder in einer Ebene parallel dazu.

Eine besonders kompakte Konfiguration mit verringertem Bauraum ergibt sich bei der erfindungsgemäßen Förderpumpe gemäß einer anderen vorteilhaften Ausgestaltung dann, wenn die Zahnräder unterschiedliche Durchmesser und/oder Außenverzahnungen mit unterschiedlichen Anzahlen von Zähnen aufweisen, insbesondere in einem Verhältnis von etwa 1:1,7.

Dabei ist von besonderem Vorteil, wenn das auf der konvexen Seite des zwischen dem Zuführkanal und dem Auslasskanal eingeschlossenen Winkels liegende erste Zahnrad einen größeren Durchmesser und/oder eine Außenverzahnung mit einer höheren Anzahl von Zähnen aufweist als das auf der konkaven Seite des Winkels liegende zweite Zahnrad.

Ein verringerter Bauraum ist auch deshalb förderlich, weil dadurch die Verweildauer der Materialschmelze in der Förderpumpe und damit die mechanische und/oder thermische Belastung der Materialschmelze reduziert werden.

Grundsätzlich sind sämtliche miteinander kooperierenden Verzahnungen als Außenverzahnung für die beiden Zahnräder der Zahnradanordnung der Förderpumpe denkbar.

Hinsichtlich Antriebsökonomie und Geräuschaufkommen ergeben sich besonders günstige Verhältnisse, wenn die Außenverzahnungen des ersten Zahnrads und des zweiten Zahnrads als Evolventenverzahnungen ausgebildet sind, und zwar insbesondere jeweils nach Art einer geraden Verzahnung, einer schrägen Verzahnung oder einer Pfeilverzahnung.

Die Handhabung der erfindungsgemäßen Förderpumpe lässt sich besonders sicher gestalten, wenn die Förderpumpe mit einem Gehäuse ausgebildet ist, in welchem die Kanalanordnung mit dem Zuführkanal und dem Auslasskanal und/oder die Zahnradanordnung mit dem ersten Zahnrad und dem zweiten Zahnrad ganz oder teilweise aufgenommen sind.

Eine besonders schonende Verarbeitung der Materialschmelze in der Förderpumpe ergibt sich gemäß einer anderen vorteilhaften Ausgestaltungsform der erfindungsgemäßen Förderpumpe dann, wenn diese, insbesondere über das Gehäuse, beheizbar ausgebildet ist und dazu vorzugsweise eine steuerbar betreibbare Heizeinrichtung aufweist.

Die Erfindung betrifft ferner auch eine Extrusionsvorrichtung, insbesondere zur Filamentherstellung aus einer Materialschmelze. Diese ist ausgebildet mit einem Extruder, welcher eine Extruderkammer und mindestens eine darin drehbar angeordnete Extruderschnecke aufweist und welcher insbesondere als ein oder mit einem Compounder zur Aufnahme von Ausgangsstoffen für eine Materialschmelze und/oder zum Ausbilden einer Materialschmelze aus zugeführten Ausgangsstoffen ausgebildet ist. Ferner ist eine Düse als Austritt für die Materialschmelze aus der Extrusionsvorrichtung mit einer Düsenkammer und einer Austrittsöffnung ausgebildet. Schließlich weist die Extrusionsvorrichtung eine erfindungsgemäße Förderpumpe zur Förderung einer Materialschmelze vom Extruder zur Düse auf.

Der Zuführkanal der Förderpumpe ist eingangsseitig zur Aufnahme und zum Zuführen einer vom Extruder bereitgestellten Materialschmelze in Fluidverbindung mit einem Auslass der Extruderkammer des Extruders ausgebildet.

Ferner ist der Auslasskanal der Förderpumpe ausgangsseitig zum Auslass der Materialschmelze in Fluidverbindung mit einem Einlass der Düsenkammer der Düse ausgebildet.

Gemäß einem anderen Aspekt der vorliegenden Erfindung wird auch ein Verfahren zur Filamentherstellung aus einer Materialschmelze angegeben.

Das erfindungsgemäße Herstellungsverfahrens ist gekennzeichnet durch die Verwendung einer erfindungsgemäßen Extrusionsvorrichtung und/oder einer erfindungsgemäß ausgestalteten Förderpumpe.

Bei einer vorteilhaften Weiterbildung des erfindungsgemäßen Verfahrens sind oder werden zur besonders schonenden Verarbeitung der zu Grunde liegenden Materialschmelze und zur entsprechenden Handhabung des hergestellten Filaments der Auslasskanal der Förderpumpe parallel zur Erdbeschleunigung g und insbesondere die Längsachse oder die Richtung des Auslasskanals der Förderpumpe in Richtung der Erdbeschleunigung g ausgerichtet.

Alternativ oder zusätzlich kann es vorgesehen sein, dass zu der oder bei der Herstellung der Materialschmelze der zu Grunde liegende Extruder in Unterfütterung betrieben wird.

Weitere Einzelheiten, Vorteile und Merkmale der vorliegenden Erfindung ergeben sich aus nachfolgender Beschreibung von Ausführungsbeispielen anhand der Figuren.
- Figuren 1 und 2: zeigen in schematischer und teilweise geschnittener Draufsicht 2 Ausführungsformen der erfindungsgemäßen Förderpumpe.
- Figur 3: zeigt in schematischer und teilweise geschnittener Draufsicht eine Ausführungsform der erfindungsgemäßen Extrusionsvorrichtung.

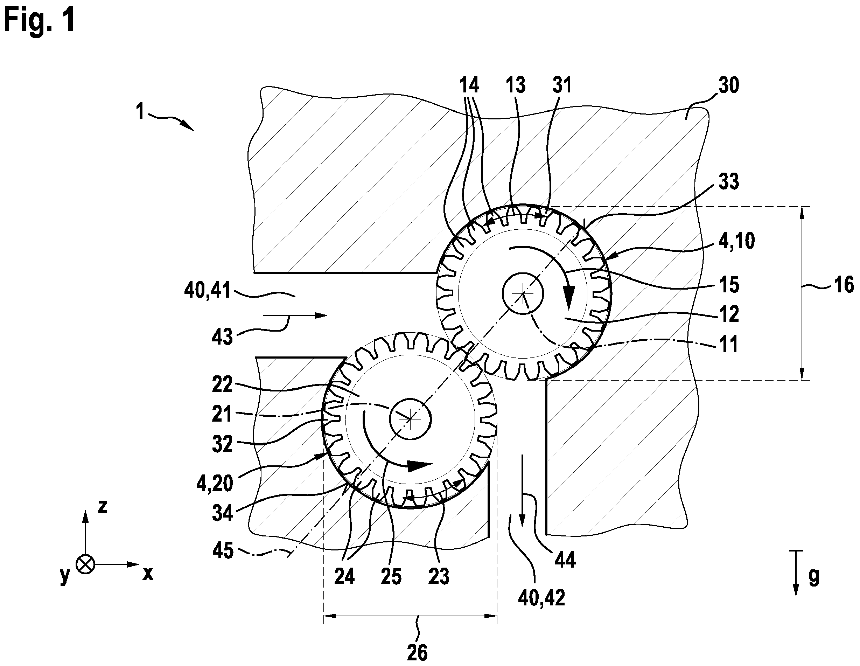

Nachfolgend werden unter Bezugnahme auf die Figuren 1 bis 3 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

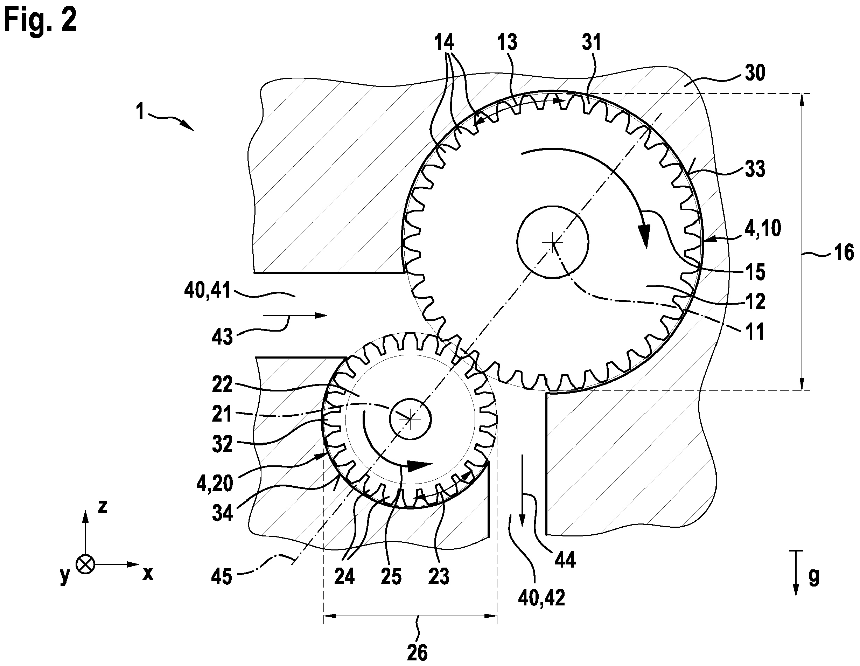

Figuren 1 und 2 zeigen in schematischer und teilweise geschnittener Draufsicht zwei Ausführungsformen der erfindungsgemäßen Förderpumpe 1.

Die erfindungsgemäße Förderpumpe 1 der Darstellung nach Figur 1 weist in einem Gehäuse 30 eine Zahnradanordnung 4 mit einem ersten Zahnrad 10 und einem zweiten Zahnrad 20 zur Förderung einer Materialschmelze von einem Zuführkanal 41 einer Kanalanordnung 40, der auch als erster Kanal oder Förderkanal bezeichnet wird, zu einem Auslasskanal 42 der Kanalanordnung 40 auf, der auch als zweiter Kanal oder Ausgabekanal bezeichnet wird.

Der Zuführkanal 41 ist ein sich in einer Richtung oder entlang einer Längsachse 43 erstreckender linearer Kanal, an welchen sich in einem Übergangsbereich der Auslasskanal 42 als linearer Kanal in einer Richtung oder entlang einer Längsachse 44 erstreckend anschließt. Die Richtungen oder Längsachsen 43 und 44 des Zuführkanals 41 bzw. des Auslasskanals 42 verlaufen parallel zur x-Richtung bzw. zur z-Richtung. Sie spannen damit eine Ebene auf, in welcher auch die Körper 12 und 22 der ersten und zweiten Zahnräder 10 bzw. 20 angeordnet sind.

Im Gehäuse 30 ist im Übergangsbereich zwischen dem Zuführkanal 41 und dem Auslasskanal 42 eine erste Kammer 31 zur Aufnahme des ersten Zahnrads 10 und eine zweite Kammer 32 zur Aufnahme des zweiten Zahnrads 20 ausgebildet. Die ersten und zweiten Kammern 31 bzw. 32 werden von Wänden 33 bzw. 34 des Gehäuses 30 zumindest teilweise umgeben.

Im Betrieb werden das erste Zahnrad 10 und das zweite Zahnrad 20 der Zahnradanordnung 4 miteinander kämmend in Rotation versetzt. Die Rotationen sind in Figur 1 durch die Pfeile 15 und 25 mit ihren Drehrichtungen angedeutet. Der eigentliche Antrieb ist nicht dargestellt.

In dem in Figur 1 dargestellten Fall weisen die Zahnräder 10, 20 identische Radien oder Durchmesser 16, 26 und identische Anzahlen von Zähnen 14, 24 ihrer Außenverzahnungen 13, 23 auf.

Die Verbindungsachse 45 der Rotationsachsen 11, 21 der Zahnräder 10, 20, welche auf den Rotationsachsen 11, 21 senkrecht steht, bildet eine Winkelhalbierende des zwischen den Richtungen oder Längsachsen 43 und 44 der Kanäle 41, 42 eingeschlossenen Winkels. Dieser beträgt in dem in Figur 1 dargestellten Fall 90°, nämlich zwischen der x-Richtung der Horizontalen und der zur z-Richtung entgegengesetzten Richtung in der Vertikalen. Die Rotationsachsen 11, 21 sind parallel zur y-Richtung orientiert.

Im Betrieb werden die Zahnräder 10, 20 so betrieben, dass die Zähne 14, 24 der Zahnräder 10, 20 auf der dem Zuführkanal 41 zugewandten Seite auseinanderlaufen, wogegen sie auf der dem Auslasskanal 42 zugewandten Seite aufeinander zu laufen.

Mit den Richtungen oder Längsachsen 43 und 44 der linear ausgestalteten Kanäle 41, 42 ist eine diesen jeweils entsprechende Richtung des Materialflusses 46 der Materialschmelze vorgegeben.

Die Ausführungsform der erfindungsgemäßen Förderpumpe 1 gemäß Figur 2 unterscheidet sich von der Ausführungsform gemäß Figur 1 darin, dass das erste Zahnrad 10 einen Durchmesser 16 aufweist, der größer ist als der Durchmesser 26 des zweiten Zahnrads 20.

In dem in Figur 2 dargestellten Fall beträgt das Verhältnis der Durchmesser etwa 1:1,7.

Dieser Wert ist jedoch nicht zwingend, sondern kann je nach Wahl des Winkels zwischen den Richtungen 43 und 44 von Zuführkanal 41 und Auslasskanal 44 und der weiteren Dimensionierung der Förderpumpe 1 gewählt werden.

Zu beachten ist, dass das Zahnrad 10 der Zahnradanordnung 4 mit dem größeren Durchmesser 16 auf der konvexen Seite des Winkels zwischen den Richtungen oder Längsachsen 43, 44 der Kanäle 41, 42 angeordnet ist, wogegen das Zahnrad 20 mit dem geringeren Durchmesser 26 auf der konkaven Seite des Winkels zwischen den Richtungen oder Längsachsen 43 und 44 der Kanäle 41, 42 liegt. Dadurch kann die Richtungsänderung des Materialflusses 46 von der Richtung 43 zur Richtung 44 mit einer besonders kompakten Bauweise erreicht werden.

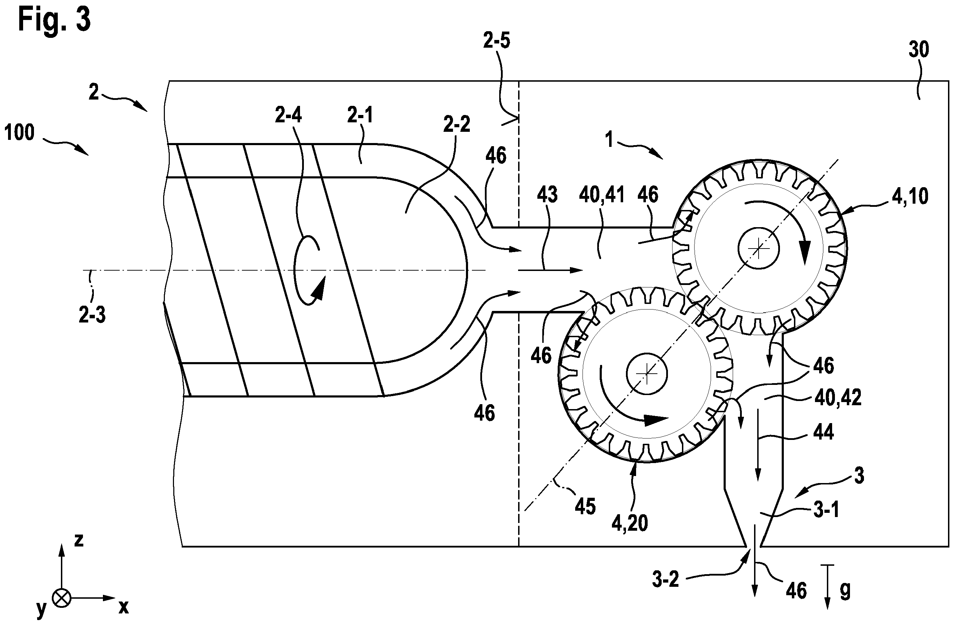

Figur 3 zeigt in schematischer und teilweise geschnittener Draufsicht eine Ausführungsform der erfindungsgemäßen Extrusionsvorrichtung 100 unter Verwendung einer Ausführungsform der erfindungsgemäßen Förderpumpe 1 gemäß Figur 1.

Die Extrusionsvorrichtung 100 gemäß Figur 3 besteht dem Kern nach neben der erfindungsgemäßen Förderpumpe 1 (i) aus einem Extruder 2 mit einer Extruderkammer 2-1 und einer Extruderschnecke 2-2 zum Erzeugen und/oder Bereitstellen einer Materialschmelze und (ii) einer Düse 3 mit einer Düsenkammer 3-1 und einer Austrittsöffnung 3-2 zur Ausgabe eines Filamentstrangs.

Bei der erfindungsgemäßen Extrusionsvorrichtung 100 wird die vom Extruder 2 erzeugte und an einem Auslass der Extruderkammer 2-1 bereitgestellte Materialschmelze über den Zuführkanal 41 der Förderpumpe 1 unter Wirkung der zur Rotation angetriebenen Zahnradanordnung 4 mit dem ersten Zahnrad 10 und dem zweiten Zahnrad 20 zum Auslasskanal 42 und von dort in die Düsenkammer 3-1 der Düse 3 mithin über deren Austrittsöffnung 3-2 nach extern gefördert.

Letztlich erfolgt der Materialfluss 46 somit vom Extruder 2 über den Zuführkanal 41, die Zahnradanordnung 4, den Auslasskanal 42 und die Düsenkammer 3-1 zur Austrittsöffnung 3-2 der Düse 3 hin.

Zwar ist es grundsätzlich möglich, den Extruder 2 mit seinem Flansch 2-5 als Anschlussbereich in beliebiger geometrischer Anordnung zur Richtung oder Längsachse 43 des ersten Kanals 41 als Zuführkanal oder Förderkanal an die erfindungsgemäße Förderpumpe 1 anzubinden, jedoch ergibt sich für die Materialschmelze, also den Materialstrom 46, ein besonders schonender Übergang vom Extruder 2 zur Förderpumpe 1, wenn gemäß Figur 3 die Rotationsachse 2-3 der Extruderschnecke 2-2 parallel ausgerichtet ist zur Längsachse 43 und damit zur Flussrichtung im ersten Kanal 41 der Kanalanordnung 40 der Förderpumpe 1. Der Auslass der Extruderkammer 2-1 ist somit für einen leichten Übertritt des Materialstroms 46 in unmittelbarer Nachbarschaft zum Einlass des ersten Kanals 41 angeordnet, so dass der erste Kanal 41 quasi eine lineare Verlängerung der Extruderkammer 2-1 bildet.

Es sind jedoch auch andere geometrische Ausführungsformen denkbar, wenn es auf einen besonders schonenden Übergang des Materialflusses 46 von der Extruderkammer 2-1 zum Zuführkanal 41 nicht ankommt.

Die vorliegende Erfindung betrifft insbesondere eine Schmelzepumpe und deren Verwendung zur Filamentherstellung.

### Verwendung von Schmelzepumpen allgemein

Besonders bei so genannten Compoundierlinien kommen Schmelzepumpen vermehrt zum Einsatz.

Compounder werden hauptsächlich zum Mischen verschiedener Polymere oder zur Zugabe von Additiven und/oder Füllstoffen in Polymere verwendet. Dies geschieht im Allgemeinen über einen Doppelschneckenextruder, der insbesondere unterfüttert betrieben wird. Beim unterfütterten Betrieb wird die Materialzufuhr, anders als bei herkömmlichen Einschneckenextrudern, schon vor dem Einzug der Schnecke dosiert.

Die unterfütterte Förderweise stellt sicher, dass ein gewünschtes Mischverhältnis der zu mischenden Stoffe gewährleistet wird. Da das Granulat die Dosiereinheit nicht kontinuierlich durchläuft, sondern dazu neigt in kleinen Schüben herauszurieseln, ist der Materialfluss von Compoundern pulsierend.

Das compoundierte Material wird anschließend überwiegend granuliert und durch Anschlussprozesse - zum Beispiel durch Extrusion oder Spritzgießen - zum Produkt weiterverarbeitet.

Hierbei ist eine Pulsation und damit eine Schwankung der Granulatkörner vertretbar.

Bei der Weiterverarbeitung mittels Extrusion kann dieser Anschlussprozess mit dem Einsatz einer Schmelzepumpe 1 am Compounder entfallen. Dazu wird diese zwischen Doppelschnecke und Düsenwerkzeug am Compounder installiert.

Es handelt sich hierbei um eine Zahnradpumpe, die nach dem Verdrängerprinzip arbeitet.

Zwei Zahnräder 10, 20 kämmen dabei ineinander und fördern zwischen den Flanken der Zähne 14, 24 der entsprechenden Außenverzahnungen 13, 23 Material von der Saugseite oder dem Einlass und dessen Kanal 41 zur Druckseite oder dem Auslass und dessen Kanal 42.

Durch das Kämmen der Zahnräder 10, 20 wird das Material aus den Zahnzwischenräumen herausgepresst und kann somit nicht zum Einlass zurückfließen. Folglich wird am Auslass und somit im Auslasskanal 42 ein Druck aufgebaut.

Durch die stetige Füllung der Zahnzwischenräumen wird eine volumetrische Förderung erreicht und damit die Pulsation des Compounders gepuffert.

Um einen homogenen Schmelzestrom sicherzustellen, kann die Schmelzepumpe 1 heizbar ausgeführt werden.

### Filamentherstellung

Das Fused-Filament-Fabrication-Verfahren (FFF), das zu den additiven Fertigungsverfahren zählt, schmilzt über eine beheizte Düse thermoplastische Werkstoffe auf und bringt sie über dreiachsige Druckkopfbewegungen in Bauteilform. Der zu verarbeitende Werkstoff wird üblicherweise in Strangform zugeführt und als Filament bezeichnet. Die Förderung in der FFF-Maschine erfolgt hierbei fast ausschließlich über Reibräder, die an das Filament angepresst werden und somit den Vorschub realisieren. Demzufolge werden an das Filament hohe Anforderungen bezüglich der Maßhaltigkeit gestellt. Es kommt hierbei sowohl auf die Einhaltung eines definierten Durchmessers als auch auf eine geringe Querschnittsabweichung von der idealen Kreisgeometrie an.

Daher werden zur Filamentherstellung Extrusionslinien verwendet. Die Herstellung von Blends im Sinne von Polymermischungen oder die Zugabe von Füllstoffen und Additiven wird dementsprechend in einem vorgeschalteten Compoundierprozess umgesetzt. Folglich ist ein umfangreicher Maschinenpark erforderlich, um beispielsweise faserverstärkte Filamente herstellen zu können. Ferner kommt es zu einer höheren thermischen Schädigung des Werkstoffes infolge des wiederholten Aufschmelzens. Auch darf die mechanische Schädigung durch den zusätzlichen Scherprozess in den Schnecken nicht außer Acht gelassen werden. Beigemischte Fasern werden hierbei zerteilt und somit die Faserlänge verkürzt. Dies führt zu einer Verschlechterung der mechanischen Eigenschaften des Werkstoffes. Schließlich sei auf den erhöhten Energiebedarf des wiederholten Aufschmelzens hingewiesen.

Die Extruderschnecke 2-2 ist in der Regel horizontal angeordnet. Häufig wird über ein Düsenwerkzeug 3 das Material dann auch horizontal extrudiert. Hierbei muss sichergestellt werden, dass der Einfluss der Gravitation den Polymerstrang unmittelbar nach Düsenaustritt nicht verformt. Dazu werden üblicherweise Kalibriereinheiten eingesetzt. Alternativ kann der Schmelzefluss nach der Schnecke 2-2 in die vertikale umgelenkt werden. Damit kann die Abweichung der Querschnittsgeometrie infolge der Gravitation verhindert werden. Durch das Eigengewicht längt sich der Strang lediglich. Jedoch darf bei der Umlenkung der Schmelze die Umorientierung der Polymerketten nicht vernachlässigt werden. Nach Düsenaustritt kann es somit zu einer Relaxation der Ketten kommen, was sich in einer Verformung des Strangs äußert und wiederum den Querschnitt negativ beeinflusst.

### Kern der vorliegenden Erfindung

Eine Grundidee der vorliegenden Erfindung besteht darin, einen Compounder bei der Filamentherstellung einzusetzen, diesen mit einer Schmelzepumpe 1 zu bestücken und gleichzeitig die Prozessstabilität durch einen vertikalen Materialfluss zu verbessern.

Dies geschieht in diesem Zusammenhang nicht wie üblich über eine Umlenkung des Schmelzeflusses, sondern über eine neuartige Kombination von Zahnrädern 10, 20 und deren Anordnung im Inneren der Schmelzepumpe 1.

Dazu kann eine Zahnradstufe zum Einsatz kommen, die zwei unterschiedliche Zähnezahlen bei den verwendeten Zahnrädern 10, 20 aufweist, also unterschiedlich große Stirnräder 10 und 20, wie dies in Figur 2 dargestellt ist.

Erfindungsgemäß ist die Zahnradstufe mit den Zahnrädern 10, 20 in der Schmelzepumpe 1 geneigt angeordnet. D.h. die - insbesondere senkrechte - Verbindungslinie 45 zwischen den - besondere zueinander parallel ausgerichteten - Zahnradachsen 11, 21 wird aus der Senkrechten um einen Winkel gekippt.

Somit kann erreicht werden, dass durch die Schmelzepumpe 1 bei horizontaler Saugseite im Einlasskanal 41 der Kanalanordnung 40 - in den Figuren in der xy-Ebene - die Druckseite und damit der Auslasskanal 42 der Kanalanordnung 40 vertikal angeordnet ist, nämlich in den

Figuren entgegen der z-Richtung und parallel zur Richtung der Schwerkraft oder Erdbeschleunigung g.

Die herkömmlicherweise notwendige nachträgliche Materialumlenkung entfällt somit.

Neben der geringeren Verweildauer des Materials in Schmelzeform verringert sich ebenso der Effekt der Zwangsorientierung der Polymerketten. Durch die unterschiedlichen Zahnradgrößen kann die damit realisierte Übersetzung auch zur Verringerung der erforderlichen Drehmomente der Antriebseinheit beitragen. Die Ausführung der Zahnräder 10, 20 kann hierbei gerad-, schräg- oder pfeilverzahnt sein, insbesondere in Form einer Evolventenverzahnung.

Neben der vorstehenden schriftlichen Beschreibung der Erfindung wird zu deren ergänzender Offenbarung hiermit explizit auf die zeichnerische Darstellung der Erfindung in den Figuren 1 bis 3 Bezug genommen.

### Bezugszeichenliste

- 1: Förderpumpe, Schmelzepumpe
- 2: Extruder
- 2-1: Extruderkammer
- 2-2: Extruderschnecke
- 2-3: Rotationsachse der Extruderschnecke
- 2-4: Drehrichtung
- 2-5: Anschlussbereich, Flansch
- 3: Düse, Austritt
- 3-1: Düsenkammer
- 3-2: Austrittsöffnung
- 4: Zahnradanordnung

- 10: (erstes) Zahnrad
- 11: Rotationsachse des ersten Zahnrads 10
- 12: Zahnradkörper
- 13: Außenverzahnung
- 14: Zahn
- 15: Drehung, Drehrichtung
- 16: Durchmesser

- 20: (zweites) Zahnrad
- 21: Rotationsachse des zweiten Zahnrads 20
- 22: Zahnradkörper
- 23: Außenverzahnung
- 24: Zahn
- 25: Drehung, Drehrichtung
- 26: Durchmesser

- 30: Gehäuse
- 31: (erste) Kammer
- 32: (zweite) Kammer
- 33: Wand der ersten Kammer 31
- 34: Wand der zweiten Kammer 32

- 40: Kanalanordnung
- 41: (erster) Kanal, Zuführkanal, Förderkanal
- 42: (zweiter) Kanal, Auslasskanal, Abführkanal
- 43: Flussrichtung, Richtung oder Längsachse des ersten Kanals 41
- 44: Flussrichtung, Richtung oder Längsachse des zweiten Kanals 42
- 45: (senkrechte) Verbindungslinie der Drehachsen 11,21 der Zahnräder 10, 20
- 46: Materialtransport, Materialstrom

- 100: Extrusionsvorrichtung

- g: Schwerkraft, Erdbeschleunigung
- x: Raumrichtung
- y: Raumrichtung
- z: Raumrichtung

## Patentansprüche

1. Förderpumpe (1) für eine Materialschmelze und insbesondere Schmelzepumpe zur Filamentherstellung,
- welche als Verdrängerpumpe
- einen Zuführkanal (41) zum Zuführen einer Materialschmelze,
- einen Auslasskanal (42) zum Abführen der Materialschmelze und
- eine Zahnradanordnung (4) mit einem ersten Zahnrad (10) mit einer ersten Rotationsachse (11) und mit einem mit diesem in kämmendem Eingriff stehenden zweiten Zahnrad (20) mit einer zweiten Rotationsachse (21), in einem Übergangsbereich zwischen und in Fluidverbindung mit dem Zuführkanal (41) und dem Auslasskanal (42) aufweist, und
- bei welcher
- das erste Zahnrad (10) und das zweite Zahnrad (20) miteinander kämmend um ihre jeweilige Rotationsachse (11, 21) derart rotierbar sind, dass bei Rotation eine zugeführte Materialschmelze vom Zuführkanal (41) zum Auslasskanal (42) überführbar ist,
- eine Längsachse (43) des Zuführkanals (41) und eine Längsachse (44) des Auslasskanals (42) einen von 0° und von 180° verschiedenen Winkel einschließen und
- eine auf den Rotationsachsen (11, 21) der Zahnräder (10, 20) senkrecht stehende Verbindungslinie (45) der Rotationsachsen (11, 21) mit der Längsachse (43) des Zuführkanals (41) und mit der Längsachse (44) des Auslasskanals (42) jeweils einen von 90° verschiedenen Winkel einschließt.

2. Förderpumpe (1) nach Anspruch 1, bei welcher der Winkel zwischen der Längsachse (43) des Zuführkanals (41) und der Längsachse (44) des Auslasskanals (42) einen Wert von 90° oder im Wesentlichen 90° aufweist.

3. Förderpumpe (1) nach einem der vorangehenden Ansprüche, bei welcher die Winkel zwischen der senkrechten Verbindungslinie (45) der Rotationsachsen (11, 21) der Zahnräder (10, 20) und den Längsachsen (43, 44) des Zuführkanals (41) bzw. des Auslasskanals (42) gleich oder im Wesentlichen gleich sind und insbesondere einen Wert von 45° oder im Wesentlichen 45° aufweisen.

4. Förderpumpe (1) nach einem der vorangehenden Ansprüche, bei welcher die Rotationsachsen (11, 21) der Zahnräder (10, 20) zueinander parallel ausgerichtet sind und insbesondere senkrecht zu einer durch die Längsachsen (43, 44) des Zuführkanals (41) und des Auslasskanals (42) definierten Ebene ausgerichtet sind.

5. Förderpumpe (1) nach einem der vorangehenden Ansprüche, bei welcher die Zahnräder (10, 20) unterschiedliche Durchmesser (16, 26) und/oder Außenverzahnungen (13, 23) mit unterschiedlichen Anzahlen von Zähnen (14, 24) aufweisen, insbesondere in einem Verhältnis von etwa 1:1,7.

6. Förderpumpe (1) nach Anspruch 5, bei welcher das auf der konvexen Seite des zwischen dem Zuführkanal (41) und dem Auslasskanal (42) eingeschlossenen Winkels liegende erste Zahnrad (10) einen größeren Durchmesser (16) und/oder eine Außenverzahnung (13) mit einer höheren Anzahl von Zähnen (14) aufweist als das auf der konkaven Seite des Winkels liegende zweite Zahnrad (20).

7. Förderpumpe (1) nach einem der vorangehenden Ansprüche, bei welcher Außenverzahnungen (13, 23) des ersten Zahnrads (10) und des zweiten Zahnrads (20) als Evolventenverzahnungen ausgebildet sind, und zwar insbesondere jeweils nach Art einer geraden Verzahnung, einer schrägen Verzahnung oder einer Pfeilverzahnung.

8. Förderpumpe (1) nach einem der vorangehenden Ansprüche,
- mit einem Gehäuse (30), in welchem die Kanalanordnung (40) mit dem Zuführkanal (41) und dem Auslasskanal (42) und/oder die Zahnradanordnung (4) mit dem ersten Zahnrad (10) und dem zweiten Zahnrad (20) ganz oder teilweise aufgenommen sind,
- wobei das Gehäuse (30) insbesondere beheizbar ausgebildet ist und dazu vorzugsweise eine steuerbar betreibbare Heizeinrichtung aufweist.

9. Extrusionsvorrichtung (100), insbesondere zur Filamentherstellung aus einer Materialschmelze, mit:
- einem Extruder (2), welcher eine Extruderkammer (2-1) und mindestens eine darin drehbar angeordnete Extruderschnecke (2-2) aufweist, insbesondere als ein oder mit einem Compounder und zur Aufnahme von Ausgangsstoffen für eine Materialschmelze und/oder zum Ausbilden einer Materialschmelze aus zugeführten Ausgangsstoffen ausgebildet ist,
- einer Düse (3) als Austritt für die Materialschmelze aus der Extrusionsvorrichtung (100) mit einer Düsenkammer (3-1) und einer Austrittsöffnung (3-2) und
- einer Förderpumpe (1) nach einem der Ansprüche 1 bis 8 zur Förderung einer Materialschmelze vom Extruder (2) zur Düse (3),
wobei
- der Zuführkanal (41) der Förderpumpe (1) eingangsseitig zur Aufnahme und zum Zuführen einer vom Extruder (2) bereitgestellten Materialschmelze in Fluidverbindung mit einem Auslass der Extruderkammer (2-1) des Extruders (2) ausgebildet ist und
- der Auslasskanal (42) der Förderpumpe (1) ausgangsseitig zum Auslass der Materialschmelze in Fluidverbindung mit einem Einlass der Düsenkammer (3-1) der Düse (3) ausgebildet ist.

10. Verfahren zur Filamentherstellung aus einer Materialschmelze, bei welchem eine Extrusionsvorrichtung (100) nach Anspruch 9 und/oder eine Förderpumpe (1) nach einem der Ansprüche 1 bis 8 verwendet werden.

11. Verfahren nach Anspruch 10, bei welchem der Auslasskanal (42) der Förderpumpe (1) parallel zur Erdbeschleunigung (g) und insbesondere die Längsachse (44) des Auslasskanals (42) der Förderpumpe (1) in Richtung der Erdbeschleunigung (g) ausgerichtet sind oder werden.

12. Verfahren nach Anspruch 10 oder 11, bei welchem zu oder bei der Herstellung der Materialschmelze der zu Grunde liegende Extruder (2) in Unterfütterung betrieben wird.
